# EUROPÄISCHE PATENTSCHRIFT

(11) **EP 3 365 174 B1**
(45) Veröffentlichungstag und Bekanntmachung des Hinweises auf die Patenterteilung: **25.10.2023**
(21) Anmeldenummer: 16784508.0
(22) Anmeldetag: 20.10.2016
(51) Int. Cl.: B32B 17/10, C03C 27/12

(54) **VERFAHREN ZUR HERSTELLUNG EINER VERBUNDSCHEIBE MIT INFRAROTREFLEKTIERENDER BESCHICHTUNG AUF EINER TRÄGERFOLIE**
METHOD FOR PRODUCING A COMPOSITE PANE HAVING AN INFRARED-REFLECTING COATING ON A CARRIER FILM
PROCÉDÉ DE FABRICATION D'UNE VITRE COMPOSITE DOTÉE D'UN REVÊTEMENT RÉFLÉCHISSANT LES INFRAROUGES SUR UNE FEUILLE DE SUPPORT

(30) Priorität: 23.10.2015 EP 15191189
(43) Veröffentlichungstag der Anmeldung: 29.08.2018
(73) Patentinhaber: SAINT-GOBAIN GLASS FRANCE, 92400 Courbevoie (FR)
(72) Erfinder: KLEIN, Marcel, 52499 Baesweiler (DE); VAN DER MEULEN, Uwe, 52385 Nideggen (DE)
(74) Vertreter: Gebauer, Dieter Edmund
(86) Internationale Anmeldenummer: PCT/EP2016/075287
(87) Internationale Veröffentlichungsnummer: WO 2017/068076

(56) Entgegenhaltungen:
- EP-A1- 2 216 304
- EP-A1- 2 261 030
- EP-A1- 2 325 002
- EP-A1- 2 647 497
- WO-A1-2010/119770
- WO-A1-2013/131698
- WO-A1-2015/058885
- US-A1- 2002 094 407
- US-B1- 6 356 236

## Beschreibung

Die Erfindung betrifft ein Verfahren zur Herstellung einer Verbundscheibe mit einer infrarotreflektierenden Beschichtung auf einer Trägerfolie.

Scheiben im Automobilbereich, welche mit einer infrarotreflektierenden elektrisch leitfähigen Beschichtung ausgestattet sind, sind dem Fachmann hinlänglich bekannt. Derartige Beschichtungen reduzieren aufgrund ihrer infrarotreflektierenden Eigenschaften eine unerwünschte Erwärmung des Innenraums durch Sonneneinstrahlung. Die verwendeten Beschichtungen verfügen im Allgemeinen über eine gute elektrische Leitfähigkeit, die eine Beheizung der Beschichtung ermöglicht, so dass die Scheibe frei von Eis und Kondenswasser gehalten werden kann. Die Beschichtungen umfassen dabei elektrisch leitfähige Schichten, insbesondere auf Silberbasis. Die Beschichtungen sind üblicherweise mit zwei Stromsammelschienen (auch Sammelleiter oder Busbars genannt) elektrisch kontaktiert, zwischen denen ein Strom durch die beheizbare Beschichtung fließt. Diese Art der Beheizung ist beispielsweise in WO 03/024155 A2, US 2007/0082219 A1 und US 2007/0020465 A1 beschrieben, die Schichtsysteme aus mehreren Silberschichten offenbaren, die den Flächenwiderstand der leitfähigen Beschichtung weiter senken. Derartige Beschichtungen sind nicht nur elektrisch beheizbar, sondern verfügen auch über infrarotreflektierende Eigenschaften, wodurch eine Erwärmung des Fahrzeuginnenraums gerade bei langen Standzeiten eines Fahrzeugs vermindert wird. Diese Schichtsysteme sind somit nicht nur hinsichtlich sicherheitsrelevanter Aspekte, wie einer uneingeschränkten Sicht, sondern auch unter ökologischen Gesichtspunkten, wie einer Reduzierung des Schadstoffausstoßes und einer Verbesserung des Fahrzeugkomforts von besonderer Bedeutung.

Verfahren wie beispielsweise magnetfeldgestützte Kathodenzerstäubung zur Abscheidung derartiger Schichtsysteme sind dem Fachmann hinlänglich bekannt. Die Abscheidung der transparenten infrarotreflektierenden elektrisch leitfähigen Beschichtung kann wahlweise auf einer der innenliegenden Seiten der Außenscheibe oder der Innenscheibe erfolgen oder auch auf einer Trägerfolie, die zwischen die Scheiben eingelegt wird. Die direkte Abscheidung der Beschichtung auf einer der Scheibenoberflächen ist unter wirtschaftlichen Gesichtspunkten vor allem bei Produktion großer Stückzahlen vorteilhaft, während die Verwendung einer Trägerfolie mit infrarotreflektierender Beschichtung eine wesentlich höhere Flexibilität hinsichtlich der Produktion ermöglicht.

EP 0 371 949 A1 offenbart eine Verbundglasscheibe mit Sonnenschutzbeschichtung, die zwei Laminierfolien und eine dazwischen liegende Trägerfolie mit einer metallischen und einer dielektrischen Schicht umfasst. Das Verfahren zur Herstellung einer derartigen Scheibe beinhaltet in einem ersten Schritt die Herstellung eines Trilayers aus Laminierfolien und beschichteter Trägerfolie, wobei die Trägerfolie zwischen den Laminierfolien eingelegt wird. Dies hat den Vorteil, dass die kratzempfindliche Oberfläche der Beschichtung durch eine Laminierfolie geschützt ist.

Um einer Korrosion der infrarotreflektierenden Beschichtung durch Feuchtigkeit und Umgebungseinflüsse vorzubeugen wird der Randbereich der Beschichtung elektrisch isoliert oder, im Fall einer beschichteten Trägerfolie, ein Rückschnitt der Trägerfolie im Randbereich vorgenommen. Bei Verwendung eines Trilayers aus Laminierfolien und Trägerfolie gemäß EP 0 371 949 A1 gestaltet sich ein selektiver Rückschnitt der Trägerfolie jedoch schwierig, da diese beidseitig von Laminierfolien verdeckt ist. Die Handhabung einer einzelnen Trägerfolie mit infrarotreflektierender Beschichtung ist ebenfalls unvorteilhaft, da die Beschichtung empfindlich gegenüber Korrosion ist und leicht verkratzt.

US 2002/0094407 A1 zeigt ein Verfahren, bei dem eine Trägerfolie mit einem Aufbau aus einer oder mehreren dünnen Schichten mit thermischen Eigenschaften zwischen zwei Laminierfolien eingelegt und mit zwei Scheiben laminiert wird. Beschrieben ist unter anderem die Herstellung einer Zwischenschicht, welche nur aus Trägerfolie mit Aufbau oder aus Trägerfolie mit Aufbau und einer Laminierfolie besteht. Im letztgenannten Fall ist die Abfolge PVB/PET/funktionelle Schicht(en) als zwingend vorgegeben, wobei die funktionelle Schicht(en) gegenüber der äußeren Umgebung freiliegen. Ungeachtet der konkreten Abfolge, werden die Lagen der Zwischenschicht nicht miteinander verbunden, vielmehr wird nur der Verbund aus zwei Scheiben, zwei Laminierfolien und Zwischenschicht miteinander verbunden.

EP 2216304 A1 zeigt ein Verfahren, bei dem eine PET-Folie mit einer PVB-Folie laminiert und der hieraus gebildete Verbund mit einer weiteren PVB-Folie laminiert wird. Die PET-Folie kann eine IR-reflektierende Beschichtung aufweisen, die mit einem Hardcoat versehen ist.

Verwandte Verfahren werden daneben offenbart in US 6 356 236 B1 und in WO 2010/119770 A1.

Der vorliegenden Erfindung liegt die Aufgabe zugrunde, ein Verfahren zur Herstellung einer Verbundscheibe mit einer infrarotreflektierenden Beschichtung auf einer Trägerfolie bereitzustellen, bei der eine Beschädigung der infrarotreflektierenden Beschichtung vermieden wird und ein Rückschnitt der Trägerfolie im Randbereich mit einfachen Mitteln möglich ist.

Die Aufgabe der vorliegenden Erfindung wird erfindungsgemäß durch ein Verfahren zur Herstellung einer Verbundgasscheibe gemäß Anspruch 1 gelöst. Bevorzugte Ausführungen gehen aus den Unteransprüchen hervor.

Die Erfindung betrifft ein Verfahren zur Herstellung einer Verbundscheibe umfassend die Schritte
a) Bereitstellen einer Trägerfolie mit einer infrarotreflektierenden Beschichtung,
b) Auflegen einer ersten Laminierfolie auf die infrarotreflektierende Beschichtung der Trägerfolie,
c) Verbinden der Trägerfolie und der ersten Laminierfolie zu einem Bilayer, wobei die Trägerfolie und die erste Laminierfolie von jeweils einer Rolle abgerollt werden, zu einem Bilayer verbunden werden und der Bilayer auf einer Rolle aufgerollt wird,
d) Auflegen des Bilayers auf eine Außenscheibe oder Innenscheibe, wobei die erste Laminierfolie flächig auf der Außenscheibe oder Innenscheibe aufliegt, und Auflegen einer zweiten Laminierfolie auf den Bilayer, wobei die zweite Laminierfolie flächig auf der Trägerfolie aufliegt,
e) Auflegen einer Außenscheibe oder Innenscheibe auf die zweite Laminierfolie,
f) Autoklavieren des Schichtstapels, umfassend in dieser Reihenfolge
   - Außenscheibe,
   - Bilayer aus erster Laminierfolie (mit erster Laminierfolie in Kontakt zur Außenscheibe) und Trägerfolie mit infrarotreflektierender Beschichtung (mit infrarotreflektierender Beschichtung innenliegend zwischen Trägerfolie und erster Laminierfolie),
   - zweiter Laminierfolie und
   - Innenscheibe
zu einer Verbundscheibe,
wobei die Trägerfolie und die erste Laminierfolie in Schritt c) unter Druckeinwirkung bei einer Temperatur von 45°C bis 65°C zu einem Bilayer verbunden werden, und wobei in Schritt d) vor dem Auflegen der zweiten Laminierfolie die Trägerfolie mit infrarotreflektierender Beschichtung mindestens in einem Randbereich der Verbundscheibe entfernt wird.

In diesem erfindungsgemäßen Verfahren wird zunächst in den Schritten b) und c) ein Bilayer aus erster Laminierfolie und Trägerfolie erstellt, wobei die infrarotreflektierende Beschichtung zwischen Trägerfolie und erster Laminierfolie zu liegen kommt. Dadurch ist die infrarotreflektierende Beschichtung gegen Kratzer und Korrosion geschützt und kann somit ohne entsprechende Vorsichtsmaßnahmen weiterverarbeitet werden.

Nach dem Stand der Technik bekannte Verfahren verwenden hingegen häufig Folienkonfigurationen, in denen die infrarotreflektierende Beschichtung offen vorliegt, d.h. der äußeren Umgebung ungeschützt ausgesetzt ist. Dabei wird während des Produktionsprozesses entweder eine einzelne Trägerfolie mit infrarotreflektierender Beschichtung verarbeitet oder es wird ein Bilayer aus erster Laminierfolie und Trägerfolie verwendet, deren Beschichtung nicht von der Laminierfolie abgedeckt ist. Eine solche offenliegende Beschichtung muss vor rauen Oberflächen und vor Feuchtigkeit geschützt werden. Dazu sind im Produktionsprozess aufwändige Maßnahmen zu ergreifen, wie beispielsweise das Tragen von Handschuhen und Mundschutz seitens der Produktionsmitarbeiter. Bereits die durch einen Fingerabdruck oder einen Speicheltropfen aufgebrachte Feuchtigkeit reicht aus, um unter Erwärmung im Autoklavprozess eine Korrosionsstelle zu erzeugen, die im Endprodukt deutlich sichtbar ist. Derartige Produktfehler können mittels des erfindungsgemäßen Verfahrens vollständig vermieden werden.

Bevorzugt wird in Schritt c) der Bilayer auf die Außenscheibe aufgelegt und der Schichtstapel in Schritt e) mit der Innenscheibe abgeschlossen. Aufgrund der dreidimensionalen Biegung der Scheiben ist dies vorteilhaft, da so der Bilayer auf die Innenseite der Außenscheibe aufgelegt wird, die gewöhnlich eine konkave Biegung besitzt, wodurch eine Positionierung des Schichtstapels vereinfacht wird.

Nach der Behandlung des Schichtstapels im Autoklaven gemäß Schritt f) des erfindungsgemäßen Verfahrens sind die Außenscheibe und die Innenscheibe über die Zwischenschicht aus Laminierfolien und Trägerfolie miteinander verbunden, wobei die infrarotreflektierende Beschichtung flächenmäßig zwischen der Außenscheibe und der Innenscheibe angeordnet ist.

Die nach dem erfindungsgemäßen Verfahren gefertigte Verbundscheibe umfasst eine Innenscheibe und eine Außenscheibe. Mit Innenscheibe wird dabei diejenige Scheibe bezeichnet, welche in Einbaulage dem Innenraum des Fahrzeugs zugewandt ist. Mit Außenscheibe wird diejenige Scheibe bezeichnet, welche in Einbaulage der äußeren Umgebung des Fahrzeugs zugewandt ist.

Ist eine erste Schicht flächenmäßig oberhalb einer zweiten Schicht angeordnet, so bedeutet dies im Sinne der Erfindung, dass die erste Schicht weiter vom nächstliegenden Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom nächstliegenden Substrat entfernt angeordnet ist als die erste Schicht.

Eine Schicht im Sinne der Erfindung kann aus einem Material bestehen. Eine Schicht kann aber auch zwei oder mehrere Einzelschichten unterschiedlichen Materials umfassen.

Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Sind eine erste und eine zweite Schicht unmittelbar benachbart, so befinden sich keine weiteren Schichten zwischen der ersten und der zweiten Schicht und diese stehen flächenmäßig in direktem Kontakt.

In dem erfindungsgemäßen Verfahren werden die Trägerfolie und die erste Laminierfolie in Schritt c) unter Druckeinwirkung bei einer Temperatur von 45°C bis 65°C zu einem Bilayer verbunden. In diesem Temperaturbereich zeigen die Folien eine gute Haftung aneinander. Somit ist die infrarotreflektierende Beschichtung zwischen Trägerfolie und erster Laminierfolie gut geschützt, da keine Fremdpartikel in den Bilayer eintreten können. Bei zu niedrigen Temperaturen kann während der nachfolgenden Weiterverarbeitung des Bilayers ein Haftungsversagen zwischen Laminierfolie und Trägerfolie auftreten. Zu hohe Temperaturen führen dazu, dass die Folien sich nicht mehr rückstands- und beschädigungsfrei voneinander lösen lassen. Es hat sich gezeigt, dass ein Temperaturbereich von 45°C bis 65°C besonders gut geeignet ist, um einen Bilayer mit ausreichender Haftung, aber nicht zu hoher Haftung, zu erzeugen. Insbesondere werden die erste Laminierfolie und die Trägerfolie bei einer Temperatur von 55°C verbunden.

Erfindungsgemäß werden die Trägerfolie und die erste Laminierfolie von jeweils einer Rolle abgerollt, zu einem Bilayer verbunden und der Bilayer wird auf einer Rolle aufgerollt. Zur Herstellung des Bilayers können die in aufgerollter Form vorliegende Trägerfolie und Laminierfolie abgerollt, beispielsweise durch Durchlaufen eines Ofens erwärmt und anschließend über eine Presse oder ein Rollenpaar zusammengepresst werden. In einer bevorzugten Ausführungsform werden die Trägerfolie und die erste Laminierfolie in einem kontinuierlichen Prozess abgerollt, aufeinandergelegt und über ein beheiztes Rollenpaar miteinander verbunden. Die Druckeinwirkung der Rollen und der Wärmeübertrag auf die Folien bei Durchlaufen der Rollen reichen aus um eine hinreichende Haftung der Folien zu erzielen. Der Bilayer selbst kann danach ebenfalls wieder in Rollenform gebracht werden, wodurch Lagerung und Transport des Bilayers vereinfacht werden.

Die in Schritt d) zusammengefassten Verfahrensschritte (Auflegen des Bilayers auf eine Scheibe und Auflegen einer zweiten Laminierfolie auf den Bilayer) können in beliebiger Reihenfolge erfolgen. So kann der Bilayer zuerst auf die Außenscheibe aufgelegt werden und anschließend mit einer zweiten Laminierfolie bedeckt werden, oder alternativ in einem ersten Schritt die zweite Laminierfolie auf den Bilayer aufgelegt und anschließend der Schichtstapel auf die Außenscheibe aufgelegt werden.

Erfindungsgemäß wird in Schritt d) vor dem Auflegen der zweiten Laminierfolie die Trägerfolie mit infrarotreflektierender Beschichtung mindestens in einem Randbereich der Verbundscheibe entfernt. Der Randbereich ist dabei als der innerhalb eines Abstands x zur umlaufenden Kante der Scheiben (Außenscheibe, Innenscheibe) befindliche Anteil der Trägerfolie definiert. Üblicherweise liegt der Abstand x bei Werten zwischen 3 mm und 350 mm, so dass ein Rückschnitt der Trägerfolie im Randbereich um eben diesen Wert erfolgt. Der Wert x ist dabei nicht nur von der Anwendung und Formgebung der Scheibe abhängig (z.B. Seitenscheibe, Heckscheibe oder Windschutzscheibe), sondern variiert auch innerhalb einer Verbundscheibe. Besonders bei Windschutzscheiben erfolgt an der Motorkante der Scheibe ein vergleichsweise großer Rückschnitt (z.B. x zwischen 200 mm und 350 mm), während an der Dachkante (z.B. x=20 mm) und an den seitlichen A-Holmen (z.B. x=10 mm) ein wesentlich geringerer Rückschnitt erfolgt. Als Motorkante wird in diesem Sinne die, nach Montage in einer Fahrzeugkarosserie, dem Motorraum zugewandte Kante der Verbundscheibe bezeichnet, während die gegenüberliegende Dachkante an den Dachhimmel des Fahrzeugs grenzt. Als A-Holme sind die A-Säulen der Karosserie, die sich zwischen Windschutzscheibe und Seitenscheibe befinden, definiert. Auch innerhalb einer Scheibenkante ist der Rückschnitt veränderlich. So nimmt der Wert x an der Motorkante in der Regel von den A-Holmen ausgehend in Richtung der Mitte der Motorkante zu. An der Dachkante ist je nach Ausführungsform ein ähnlicher Verlauf vorhanden. Die Größe der beschichteten Trägerfolie wird demnach etwas kleiner gewählt als die Größe der beiden Laminierfolien. Der Bereich ohne Trägerfolie ist aufgrund seiner geringen Breite ohne weiteres durch einen opaken Siebdruck, wie nach dem Stand der Technik gebräuchlich, zu verdecken. Der Übergang zwischen dem Randstreifen ohne Trägerfolie und der restlichen Scheibe ist somit vom Siebdruck überdeckt und nicht als optisch störende Kante sichtbar. Im Randbereich der Verbundscheibe liegen die beiden Laminierfolien unmittelbar aufeinander. Die Trägerfolie mit infrarotreflektierender Beschichtung ist dabei vollständig von den Laminierfolien umgeben, so dass eine Korrosion der infrarotreflektierenden Beschichtung durch Umwelteinflüsse, wie beispielsweise Feuchtigkeit verhindert wird.

Ferner kann in Schritt d) das Entfernen der Trägerfolie in weiteren Bereichen notwendig sein, beispielsweise bei Verwendung von Sensoren hinter der Verbundscheibe. Bei Verwendung von Sensoren, die Strahlung im infraroten Bereich des Spektrums empfangen oder senden, ist die infrarotreflektierende Beschichtung im Arbeitsbereich des Sensors zu entfernen. Dazu wird vor dem Auflegen der zweiten Laminierfolie die Trägerfolie mit infrarotreflektierender Beschichtung im Bereich mindestens eines Sensorfensters entfernt. Im Bereich des Sensorfensters liegen somit nach Entfernen der Trägerfolie die beiden Laminierfolien unmittelbar aufeinander. In einer möglichen Ausführungsform grenzt das Sensorfenster unmittelbar an den umlaufenden Rückschnitt der Trägerfolie. In diesem Fall kann der Rückschnitt der Trägerfolie im Bereich des Sensorfensters gleichzeitig mit diesem erfolgen.

Die infrarotreflektierende Beschichtung enthält bevorzugt Silber und/oder ein elektrisch leitfähiges Oxid, besonders bevorzugt Silber, Titandioxid, Aluminiumnitrid und/oder Zinkoxid, wobei ganz besonders bevorzugt Silber eingesetzt wird.

Die infrarotreflektierende Beschichtung ist bevorzugt transparent. Darunter wird im Sinne der Erfindung eine Beschichtung verstanden, die im Spektralbereich von 500 nm bis 700 nm eine Lichttransmission von größer als 70% aufweist. Es handelt sich also um eine Beschichtung, die dafür vorgesehen und geeignet ist, im Wesentlichen flächendeckend auf der Scheibe aufgebracht zu werden, wobei die Durchsicht erhalten bleibt.

Einige der im Automobilbereich bekannten infrarotreflektierenden Beschichtungen verfügen gleichzeitig über eine sehr gute elektrische Leitfähigkeit, die eine Beheizung der Scheibe durch Anlegen einer elektrischen Spannung an die Beschichtung ermöglicht. Die erfindungsgemäße infrarotreflektierende Beschichtung ist in einer bevorzugten Ausführungsform eine elektrisch leitfähige Beschichtung. Die infrarotreflektierende elektrisch leitfähige Beschichtung weist zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Derartige infrarotreflektierende elektrisch leitfähige Beschichtungen sind nicht auf eine Anwendung in heizbaren Ausführungsformen der Verbundscheibe beschränkt. Auch in Scheiben ohne Heizfunktion werden die genannten infrarotreflektierenden elektrisch leitfähigen Beschichtungen eingesetzt, wobei die Beschichtung in diesem Fall allein die Aufgabe eines Sonnenschutzes erfüllt.

In einer besonders bevorzugten Ausgestaltung weist die infrarotreflektierende elektrisch leitfähige Beschichtung mindestens eine elektrisch leitfähige Schicht auf, welche Silber enthält, bevorzugt mindestens 99% Silber. Die Schichtdicke der elektrisch leitfähigen Schicht beträgt bevorzugt von 5 nm bis 50 nm, besonders bevorzugt von 10 nm bis 30 nm. Die Beschichtung weist bevorzugt zwei oder drei dieser leitfähigen Schichten auf, welche durch zumindest eine dielektrische Schicht voneinander getrennt sind. Solche Beschichtungen sind besonders vorteilhaft im Hinblick zum einen auf die Transparenz der Scheibe und zum anderen auf ihre Leitfähigkeit.

Der Schichtwiderstand der infrarotreflektierenden elektrisch leitfähigen Beschichtung beträgt bevorzugt von 0,5 Ohm/Quadrat bis 7,5 Ohm/Quadrat. Damit werden bei üblicherweise im Fahrzeugbereich verwendeten Spannungen vorteilhafte Heizleistungen erreicht, wobei geringe Schichtwiderstände bei gleicher angelegter Spannung zu höheren Heizleistungen führen.

Beispiele für Schichtaufbauten, die gleichermaßen über eine hohe elektrische Leitfähigkeit und eine infrarotreflektierende Wirkung verfügen, sind dem Fachmann aus WO 2013/104439 und WO 2013/104438 bekannt.

In einer möglichen Ausführungsform des erfindungsgemäßen Verfahrens werden zwischen den Schritten c) und d) mindestens zwei Sammelleiter so in den Bilayer eingelegt, dass die Sammelleiter die infrarotreflektierende Beschichtung elektrisch leitend kontaktieren. Als infrarotreflektierende Beschichtung wird dabei eine elektrisch leitfähige Beschichtung eingesetzt. Die Sammelleiter sind dafür vorgesehen, mit einer externen Spannungsquelle verbunden zu werden, so dass ein Strom zwischen den Sammelleitern durch die leitfähige Beschichtung fließt. Die Beschichtung fungiert so als Heizschicht und beheizt die Verbundscheibe infolge ihres elektrischen Widerstandes, beispielsweise um die Scheibe zu enteisen oder von Feuchtigkeitsbeschlag zu befreien.

Zum Aufbringen der Sammelleiter wird bevorzugt die erste Laminierfolie in den Bereichen, in denen die Sammelleiter aufgebracht werden sollen, entfernt. Durch diesen Rückschnitt der ersten Laminierfolie ist die infrarotreflektierende elektrisch leitfähige Beschichtung zugänglich und kann über einen Sammelleiter elektrisch kontaktiert werden. Da der Bilayer nur einen losen Vorverbund aus erster Laminierfolie und Trägerfolie mit Beschichtung darstellt, kann ein Bereich B der Laminierfolie durch einen umlaufenden Schnitt abgetrennt und von der Trägerfolie abgehoben werden, ohne dass es zu einer Beschädigung einer der Schichten kommt. Nach Aufbringen der Sammelleiter wird der ausgeschnittene Bereich B der ersten Laminierfolie an genau der Stelle, an der er entfernt wurde, aufgelegt und deckt somit die Sammelleiter ab. Der Bilayer mit Sammelleitern wird daraufhin, wie bereits beschrieben, in den Schritten d) bis f) des erfindungsgemäßen Verfahrens in einer Verbundscheibe laminiert. Während des Laminierprozesses in Schritt f) schmelzen die Laminierfolien, so dass der ausgeschnittene Bereich der ersten Laminierfolie nicht mehr als solcher zu identifizieren ist.

Das Anbringen der Sammelleiter kann insbesondere durch Auflegen, Aufdrucken, Löten oder Kleben erfolgen.

In einer bevorzugten Ausgestaltung sind die Sammelleiter als Streifen einer elektrisch leitfähigen Folie ausgebildet. Der Stromsammelschienen enthalten dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Beschichtung beispielsweise über eine Lotmasse, über einen elektrisch leitfähigen Kleber oder ein elektrisch leitfähiges Klebeband oder durch direktes Auflegen elektrisch leitend verbunden sein. Zur Verbesserung der leitenden Verbindung kann zwischen leitfähiger Beschichtung und Sammelleiter beispielsweise eine silberhaltige Paste angeordnet werden.

Alternativ können die Sammelleiter als aufgedruckte und eingebrannte leitfähige Struktur ausgebildet sein. Die aufgedruckten Sammelleiter enthalten zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und / oder anorganischen Matrix wie Pasten oder Tinten befinden, bevorzugt als gebrannte Siebdruckpaste mit Glasfritten. Die Schichtdicke der aufgedruckten Stromsammelschienen beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf.

Die infrarotreflektierende Beschichtung wird vor Schritt a) durch physikalische Gasphasenabscheidung (PVD), besonders bevorzugt magnetfeldunterstütztes Kathodenzerstäuben (Magnetronsputtering), auf die Trägerfolie aufgebracht. Geeignete Verfahren sind dem Fachmann hinreichend bekannt.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und / oder Druck.

Eine Verbundscheibe, welche nach dem erfindungsgemäßen Verfahren hergestellt ist, umfasst flächenmäßig übereinander angeordnet:
- eine Außenscheibe mit einer Außenseite und einer Innenseite,
- eine erste Laminierfolie auf der Innenseite der Außenscheibe,
- eine Trägerfolie mit einer infrarotreflektierenden Beschichtung, wobei die elektrisch leitfähige Beschichtung auf der ersten Laminierfolie aufliegt,
- eine zweite Laminierfolie und
- eine Innenscheibe mit einer Innenseite und einer Außenseite, deren Innenseite auf der zweiten Laminierfolie aufliegt.

Dabei liegen die erste Laminierfolie, die infrarotreflektierende Beschichtung und die Trägerfolie als Vorverbund in Form eines Bilayers vor. Der Bilayer besteht dabei aus erster Laminierfolie, infrarotreflektierender Beschichtung und Trägerfolie in genau dieser Reihenfolge. Da die Beschichtung zwischen der ersten Laminierfolie und der Trägerfolie angeordnet ist, ist diese bei Handhabung des vorverbundenen Bilayers während des nachfolgenden Herstellungsprozesses der Verbundscheibe vor Beschädigungen geschützt. Dadurch wird eine höhere Produktqualität ermöglicht. Der Fachmann kann durch Untersuchung der laminierten Verbundscheibe erkennen, ob die erste Laminierfolie und die Trägerfolie mit infrarotreflektierender Beschichtung als vorverbundener Bilayer eingesetzt wurden. Dies ist beispielsweise durch Nachweis von Druckspuren möglich, die beim mechanischen Zusammenpressen der erwärmten Folien zu einem vorverbundenen Bilayer entstehen.

Die infrarotreflektierende Beschichtung enthält zumindest Silber und/oder ein elektrisch leitfähiges Oxid. Beispielhafte Zusammensetzungen wurden bereits im Zuge des erfindungsgemäßen Verfahrens beschrieben.

Die Laminierfolien enthalten zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt Polyvinylbutyral. Die Dicke der Laminierfolien beträgt bevorzugt von 0,2 mm bis 2 mm, besonders bevorzugt von 0,3 mm bis 1 mm, beispielsweise 0,38 mm oder 0,76 mm.

Die Trägerfolie enthält bevorzugt zumindest Polyethylenterephthalat (PET), Polyethylen (PE) oder Gemische oder Copolymere oder Derivate davon. Das ist besonders vorteilhaft für die Handhabung, die Stabilität und die optischen Eigenschaften der Trägerfolie. Die Trägerfolie weist bevorzugt eine Dicke von 5 µm bis 500 µm, besonders bevorzugt von 10 µm bis 200 µm und ganz besonders bevorzugt von 12 µm bis 75 µm auf. Trägerschichten mit diesen Dicken lassen sich vorteilhaft in Form von flexiblen und gleichzeitig stabilen Folien bereitstellen, dies sich gut handhaben lassen.

Die Außenscheibe und/oder die Innenscheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und/oder Gemische oder Copolymere davon.

Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen.

Angedacht ist die Verwendung einer nach dem erfindungsgemäßen Verfahren hergestellten Verbundglasscheibe als Fahrzeugscheibe, Schiffsscheibe oder Flugzeugscheibe, als Bauverglasung oder Architekturverglasung, bevorzugt als Fahrzeugscheibe, besonders bevorzugt als Seitenscheibe, Windschutzscheibe oder Heckscheibe.

Im Folgenden wird die Erfindung anhand von Zeichnungen und Beispielen näher erläutert. Die Zeichnungen sind rein schematische Darstellungen und nicht maßstabsgetreu. Die Zeichnungen schränken die Erfindung in keiner Weise ein.

Es zeigen:
- Figuren 1a und 1b: einen Querschnitt einer Verbundscheibe ohne Heizfunktion,
- Figur 2a: einen Querschnitt einer Verbundscheibe mit Heizfunktion,
- Figur 2b: eine Draufsicht der Verbundscheibe gemäß Figur 2a,
- Figur 3: ein Flussdiagramm eines Verfahrens als Referenzbeispiel

- Figur 4: ein Flussdiagramm eines weiteren Verfahrens als Vergleichsbeispiel

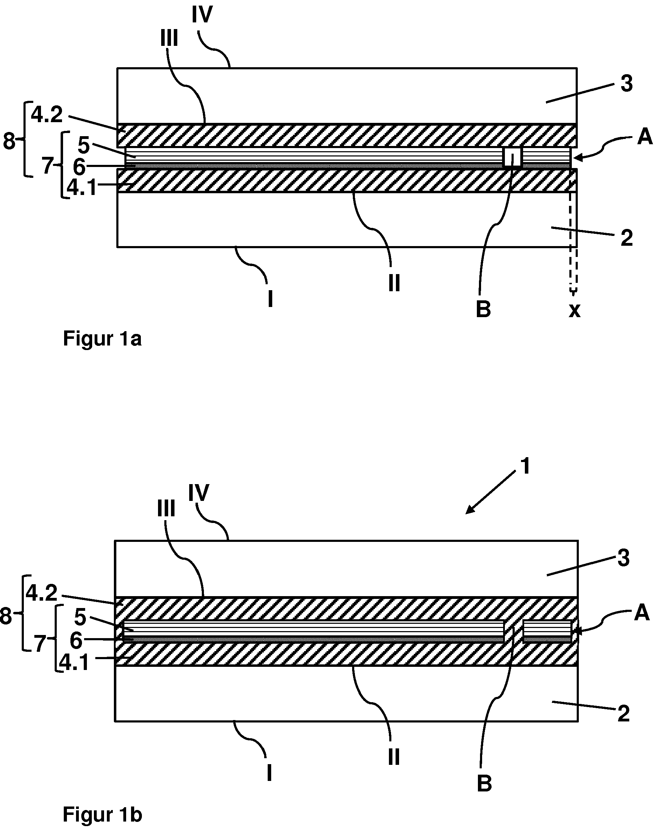

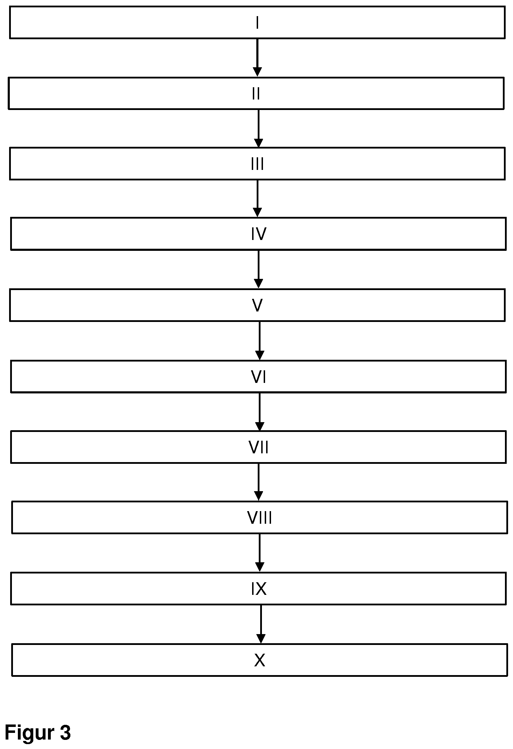

Figuren 1a und 1b zeigen einen Querschnitt einer Verbundscheibe 1, hier in einer Ausführung ohne Heizfunktion. Die Verbundscheibe 1 wurde mittels des in Figur 3 beschriebenen erfindungsgemäßen Verfahrens hergestellt. Die Verbundscheibe besteht aus einer Außenscheibe 2 aus Kalk-Natron-Glas mit einer Dicke von 2,1 mm, einer Zwischenschicht 8 und einer Innenscheibe 3 aus Kalk-Natron-Glas mit einer Dicke von 1,6 mm. Die Zwischenschicht 8 wiederum besteht aus einem Bilayer 7 und einer zweiten Laminierfolie 4.2.

Auf einer Innenseite II einer Außenscheibe 2 ist der Bilayer 7 aufgelegt. Der Bilayer 7 besteht aus einer ersten Laminierfolie 4.1 und einer Trägerfolie 5 mit infrarotreflektierender Beschichtung 6, wobei die infrarotreflektierende Beschichtung 6 zwischen der ersten Laminierfolie 4.1 und der Trägerfolie 5 liegt. Der Bilayer 7 ist so auf der Außenscheibe 2 aufgelegt, dass die erste Laminierfolie 4.1 flächig auf der Innenseite II angeordnet ist. Auf der Trägerfolie 5 des Bilayers 7 ist die zweite Laminierfolie 4.2 flächig aufgelegt. Der Schichtstapel schließt mit einer Innenscheibe 3 ab, deren Innenseite III flächig auf der zweiten Laminierfolie 4.2 aufliegt. Die Außenseite IV der Innenscheibe 3 ist nach Montage der Verbundscheibe 1 in einem Fahrzeug dem Fahrzeuginnenraum zugewandt, während die Außenseite I der Außenscheibe 2 zur äußeren Umgebung weist. Die Laminierfolien 4.1, 4.2 werden von jeweils einer PVB-Folie mit einer Dicke von 0,38 mm gebildet. Die Trägerfolie 5 besteht aus einer PET-Folie mit einer Dicke von 50 µm, auf der als infrarotreflektierende Beschichtung 6 eine silberhaltige Beschichtung aufgebracht ist. Die infrarotreflektierende Beschichtung 6 könnte auch als Heizschicht genutzt werden, da sie über eine ausreichend hohe Leitfähigkeit verfügt. In dieser Ausführungsform wird sie jedoch lediglich zur Abschirmung unerwünschter

Wärmestrahlung genutzt. Im Randbereich A der Verbundscheibe ist die Trägerfolie 5 mit infrarotreflektierender Beschichtung 6 um einen Wert x, der den Abstand zur umlaufenden Kante der Verbundscheibe 1 definiert, zurückgeschnitten, wobei x zwischen mindestens 10 mm an den A-Holmen und maximal 300 mm an der Motorkante variiert. In diesem Randbereich A sind die Trägerfolie 5 und die infrarotreflektierende Beschichtung 6 vollständig entfernt. In einem weiteren Bereich B ist die Trägerfolie 5 mit infrarotreflektierender Beschichtung 6 entfernt, da dieser Bereich zur Montage eines Sensors hinter der Verbundscheibe 1 im Innenraum des Fahrzeugs vorgesehen ist. Im Strahlengang des Sensors ist die infrarotreflektierende Beschichtung 6 zu entfernen, um einen ungehinderten Strahlendurchgang sicherzustellen und die uneingeschränkte Funktion des Sensors zu ermöglichen. Auch in diesem Bereich wird die Trägerfolie 5 ausgeschnitten. Figur 1a zeigt die Anordnung vor Lamination, wobei die Bereiche A, B gut erkennbar sind, in denen die Trägerfolie 5 entfernt wird. In diesen Bereichen A, B liegen die Laminierfolien 4.1, 4.2 unmittelbar aufeinander. Figur 1b zeigt die Anordnung gemäß Figur 1a nach Lamination des Schichtstapels zu einer Verbundscheibe 1. Im Randbereich A und im Bereich B des Sensorfensters sind die Laminierfolien 4.1, 4.2 miteinander verschmolzen. Die Laminierfolien 4.1, 4.2 umgeben die Trägerfolie 5 mit Beschichtung 6 vollständig, so dass eine Korrosion der infrarotreflektierenden Beschichtung 6 durch Umwelteinflüsse wie beispielsweise Feuchtigkeit, ausgeschlossen werden kann.

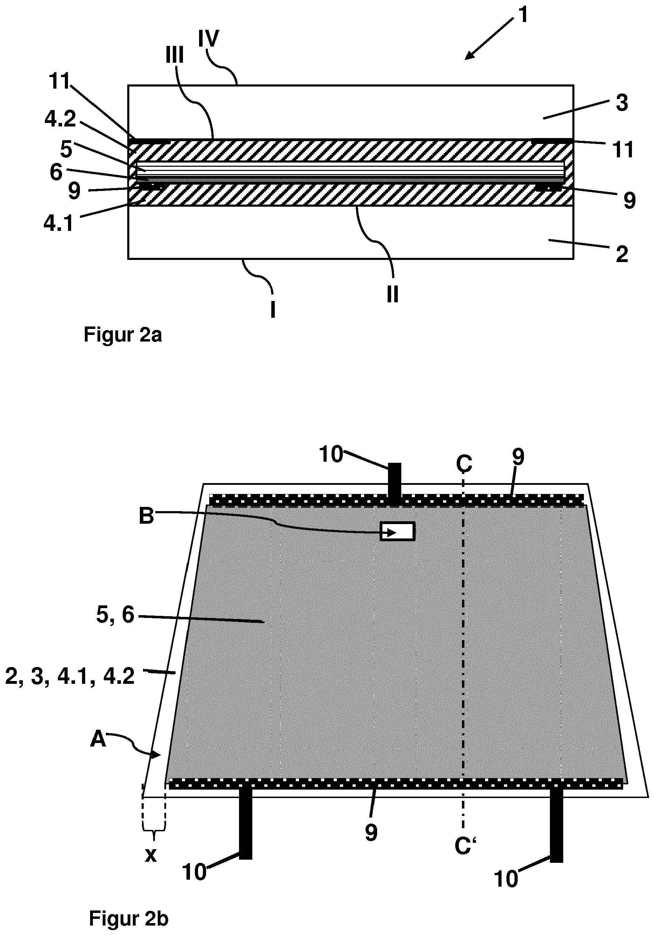

Figur 2a zeigt einen Querschnitt einer Verbundscheibe 1 gemäß Figur 1b, die zusätzlich zu den dort beschriebenen Merkmalen über Mittel zur Beheizung der Verbundscheibe 1 führt. Figur 2b zeigt eine Draufsicht der Verbundscheibe 1 gemäß Figur 2a, wobei die Schnittlinie C-C' angedeutet ist, entlang der der Querschnitt gemäß Figur 2a verläuft. Zwischen der ersten Laminierfolie 4.1 und der infrarotreflektierenden Beschichtung 6 sind an zwei gegenüberliegenden Längskanten der Verbundscheibe 1 folienförmige Sammelleiter 9 in den Schichtverbund eingelegt, die die infrarotreflektierende Beschichtung 6 elektrisch leitend kontaktieren. Über Anschlusselemente 10 kann eine elektrische Spannung an die Sammelleiter 9 angelegt werden, wodurch ein Strom durch die infrarotreflektierende Beschichtung 6 fließt und die Verbundscheibe 1 erwärmt wird.

Figur 3 zeigt ein Flussdiagramm eines Verfahrens zur Herstellung einer Verbundscheibe 1. Die in Figuren 1a und 1b beschriebene Verbundscheibe wurde mittels des Verfahrens nach Figur 3 hergestellt. Die in Figur 3 gezeigten Verfahrensschritte lauten wie folgt:
I Bereitstellen einer Trägerfolie 5 mit einer infrarotreflektierenden Beschichtung 6
II Auflegen einer ersten Laminierfolie 4.1 auf die infrarotreflektierende Beschichtung 6 der Trägerfolie 5
III Verbinden der Trägerfolie 5 und der ersten Laminierfolie 4.1 zu einem Bilayer 7, wobei die Trägerfolie 5 und die erste Laminierfolie 4.1 ein beheiztes Rollenpaar mit einer Temperatur von 55 °C durchlaufen und zu einem Bilayer 7 zusammengepresst werden
IV Zuschnitt des Bilayers 7 entsprechend der Größe der Außenscheibe 2, wobei die Kontur des zugeschnittenen Bilayers 7 der Kontur der Außenscheibe 2 entspricht
V Rückschnitt der Trägerfolie 5 mit infrarotreflektierender Beschichtung 6 im Randbereich A um einen Wert x und sofern erforderlich im Bereich B mindestens eines Sensorfensters
VI Anordnen des Bilayers 7 auf einer Außenscheibe 2, wobei die erste Laminierfolie 4.1 flächig auf der Innenseite II der Außenscheibe 2 aufliegt und diese vollständig bedeckt
VII Bereitstellen einer zweiten Laminierfolie 4.2 entsprechend der Größe der Außenscheibe 2, wobei die Kontur der zugeschnittenen zweiten Laminierfolie 4.2 der Kontur der Außenscheibe 2 entspricht
VIII Anordnen der zweiten Laminierfolie 4.2 auf dem Bilayer 7, wobei die zweite Laminierfolie 4.2 flächig auf der Trägerfolie 5 aufliegt und diese vollständig bedeckt
IX Auflegen einer Innenscheibe 3 auf die zweite Laminierfolie 4.2, wobei die Innenseite III der Innenscheibe 3 flächig auf der zweiten Laminierfolie 4.2 aufliegt und diese vollständig bedeckt
X Laminieren des Schichtstapels im Autoklaven zu einer Verbundscheibe 1

Mittels des in Figur 3 beschriebenen Verfahrens wurden 70 Windschutzscheiben mit dem in Figur 1b beschriebenen Aufbau hergestellt. Anschließend wurde eine Sichtprüfung auf Defekte der infrarotreflektierenden Beschichtung 6 durchgeführt. Die Anzahl der Scheiben mit Defekten betrug 0 (0 %). Das beschriebene Verfahren ist somit besonders vorteilhaft im Hinblick auf eine wirtschaftliche und fehlerfreie Produktion mit geringem Ausschuss. Da die infrarotreflektierende Beschichtung 6 in einem sehr frühen Stadium des Produktionsprozesses (bereits in Schritt II) durch die erste Laminierfolie 4.1 abgedeckt wird, ist diese im nachfolgenden Produktionsprozess gegen Beschädigungen und Umwelteinflüsse geschützt und Defekte der Beschichtung können vermieden werden.

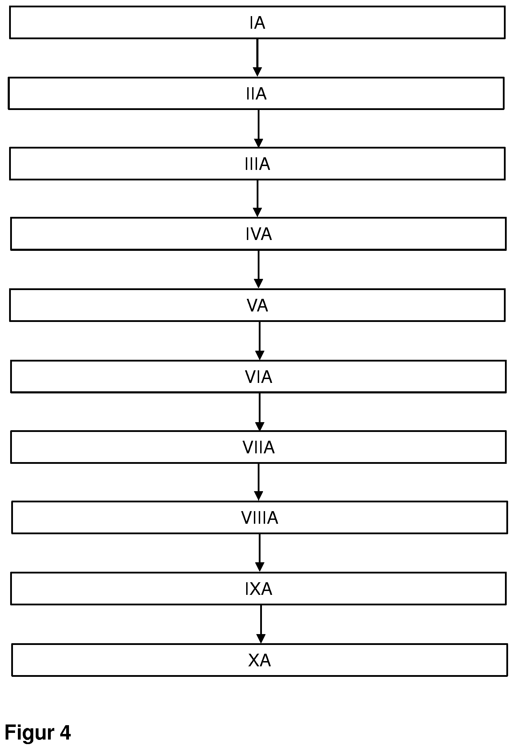

Figur 4 zeigt ein Flussdiagramm eines weiteren Verfahrens als

Vergleichsbeispiel. Die Schritte des Verfahrens gemäß Figur 4 lauten:
IA Bereitstellen einer Trägerfolie 5 mit einer infrarotreflektierenden Beschichtung 6
IIA Auflegen einer zweiten Laminierfolie 4.2 auf die unbeschichtete Oberfläche der Trägerfolie 5, wobei ein Schichtstapel aus (in dieser Reihenfolge) zweiter Laminierfolie 4.2, Trägerfolie 5 und infrarotreflektierender Beschichtung 6 entsteht
IIIA Verbinden der Trägerfolie 5 und der zweiten Laminierfolie 4.2 zu einem Bilayer 7A, wobei die Trägerfolie 5 und die erste Laminierfolie 4.1 ein beheiztes Rollenpaar mit einer Temperatur von 55 °C durchlaufen und zu einem Bilayer 7A zusammengepresst werden
IVA Zuschnitt des Bilayers 7A entsprechend der Größe der Außenscheibe 2, wobei die Kontur des zugeschnittenen Bilayers 7A der Kontur der Außenscheibe 2 entspricht
VA Rückschnitt der Trägerfolie 5 mit infrarotreflektierender Beschichtung 6 im Randbereich A um einen Wert x und sofern erforderlich im Bereich B mindestens eines Sensorfensters
VIA Bereitstellen einer ersten Laminierfolie 4.1 entsprechend der Größe der Außenscheibe 2, wobei die Kontur der zugeschnittenen ersten Laminierfolie 4.1 der Kontur der Außenscheibe 2 entspricht
VIIA Anordnen der ersten Laminierfolie 4.1 auf einer Außenscheibe 2, wobei die erste Laminierfolie 4.1 flächig auf der Innenseite II der Außenscheibe 2 aufliegt und diese vollständig bedeckt
VIIIA Anordnen des Bilayers 7A auf der ersten Laminierfolie 4.1, wobei die infrarotreflektierende Beschichtung 6 der Trägerfolie 5 flächig auf der ersten Laminierfolie 4.1 aufliegt
IXA Auflegen einer Innenscheibe 3 auf den Bilayer 7A, wobei die Innenseite III der Innenscheibe 3 flächig auf der zweiten Laminierfolie 4.2 aufliegt und diese vollständig bedeckt
XA Laminieren des Schichtstapels im Autoklaven zu einer Verbundscheibe 1

Die infrarotreflektierende Beschichtung 6 liegt somit nach Schritt IIA des Verfahrens offen und wird erst in Schritt VIIIA durch Auflegen der ersten Laminierfolie 4.2 auf die infrarotreflektierende Beschichtung der Trägerfolie 5 abgedeckt. Mittels des in Figur 4 beschriebenen Verfahrens wurden 70 Windschutzscheiben hergestellt. Der grundsätzliche Aufbau entspricht dabei dem in Figur 1b beschriebenen Aufbau, wobei die Konfiguration des Bilayers wie in Figur 4 beschrieben abweicht. Anschließend wurde eine Sichtprüfung auf Defekte der infrarotreflektierenden Beschichtung 6 durchgeführt. Die Anzahl der Scheiben mit Defekten betrug 24 (ca. 34 %), wobei 9 Scheiben (ca. 13 %) so gravierende Defekte aufwiesen, dass sie verworfen werden mussten.

### Bezugszeichenliste:

- 1: Verbundscheibe
- 2: Außenscheibe
- 3: Innenscheibe
- 4: Laminierfolien
- 4.1: erste Laminierfolie
- 4.2: zweite Laminierfolie
- 5: Trägerfolie
- 6: infrarotreflektierende Beschichtung
- 7: Bilayer
- 8: Zwischenschicht
- 9: Sammelleiter
- 10: elektrisches Anschlusselement
- 11: Siebdruck

- A: Randbereich mit Rückschnitt der Trägerfolie 5
- B: Bereich ohne Trägerfolie 5 für Sensorfenster
- x: Rückschnitt der Trägerfolie 5 im Abstand x zur umlaufenden Kante der Verbundscheibe 1
- C-C': Schnittlinie

- I: Außenseite der Außenscheibe
- II: Innenseite der Außenscheibe
- III: Innenseite der Innenscheibe
- IV: Außenseite der Innenscheibe

## Patentansprüche

1. Verfahren zur Herstellung einer Verbundscheibe (1), welches die folgenden Schritte umfasst:
a) Bereitstellen einer Trägerfolie (5) mit einer infrarotreflektierenden Beschichtung (6),
b) Auflegen einer ersten Laminierfolie (4.1) auf die infrarotreflektierende Beschichtung (6) der Trägerfolie (5),
c) Verbinden der Trägerfolie (5) und der ersten Laminierfolie (4.1) zu einem Bilayer (7), wobei die Trägerfolie (5) und die erste Laminierfolie (4.1) von jeweils einer Rolle abgerollt werden, zu einem Bilayer (7) verbunden werden und der Bilayer (7) auf einer Rolle aufgerollt wird,
d) Anordnen des Bilayers (7) auf einer Außenscheibe (2) oder Innenscheibe (3), derart, dass die erste Laminierfolie (4.1) flächig auf der Außenscheibe (2) oder Innenscheibe (3) aufliegt und Anordnen einer zweiten Laminierfolie (4.2) auf dem Bilayer (7), derart, dass die zweite Laminierfolie (4.2) flächig auf der Trägerfolie (5) aufliegt,
e) Auflegen einer Außenscheibe (2) oder Innenscheibe (3) auf die zweite Laminierfolie (4.2),
f) Autoklavieren des Schichtstapels, umfassend
- Außenscheibe (2),
- Bilayer (7) aus erster Laminierfolie (4.1) und Trägerfolie (5) mit infrarotreflektierender Beschichtung (6),
- zweite Laminierfolie (4.2) und
- Innenscheibe (3)
zu einer Verbundscheibe (1),
wobei die Trägerfolie (5) und die erste Laminierfolie (4.1) in Schritt c) unter Druckeinwirkung bei einer Temperatur von 45°C bis 65°C zu einem Bilayer (7) verbunden werden, und wobei in Schritt d) vor dem Auflegen der zweiten Laminierfolie (4.2) die Trägerfolie (5) mit infrarotreflektierender Beschichtung (6) mindestens in einem Randbereich (A) der Verbundscheibe (1) entfernt wird.

2. Verfahren nach Anspruch 1, wobei in Schritt d) vor dem Auflegen der zweiten Laminierfolie die Trägerfolie (5) mit infrarotreflektierender Beschichtung (6) im Bereich (B) mindestens eines Sensorfensters der Verbundscheibe (1) entfernt wird.

3. Verfahren nach einem der Ansprüche 1 bis 2, wobei zwischen Schritt c) und Schritt d) mindestens zwei Sammelleiter (9) in den Bilayer (7) eingelegt werden, die Sammelleiter (9) die infrarotreflektierende Beschichtung (6) elektrisch leitend kontaktieren und als infrarotreflektierende Beschichtung (6) eine elektrisch leitende Beschichtung eingesetzt wird.

4. Verfahren nach einem der Ansprüche 1 bis 3, wobei die infrarotreflektierende Beschichtung (6) vor Schritt a) durch physikalische Gasphasenabscheidung auf die Trägerfolie (5) aufgebracht wird.

5. Verfahren nach einem der Ansprüche 1 bis 4, wobei die infrarotreflektierende Beschichtung (6) zumindest Silber und/oder ein elektrisch leitfähiges Oxid enthält.

6. Verfahren nach einem der Ansprüche 1 bis 5, wobei die erste Laminierfolie (4.1) und die zweite Laminierfolie (4.2) Polyvinylbutyral (PVB), Ethylenvinylacetat (EVA), Polyurethan (PU) und/oder Gemische und/oder Copolymere davon enthalten.

7. Verfahren nach einem der Ansprüche 1 bis 6, wobei die erste Laminierfolie (2.1) und die zweite Laminierfolie (3) eine Dicke von 0,2 mm bis 2,0 mm, bevorzugt von 0,3 mm bis 1,0 mm, aufweisen.

8. Verfahren nach einem der Ansprüche 1 bis 7, wobei die Trägerfolie (5) Polyethylenterephthalat (PET), Polyethylen (PE) und/oder Gemische und/oder Copolymere davon enthält.

9. Verfahren nach einem der Ansprüche 1 bis 8, wobei die Trägerfolie (5) eine Dicke von 5 µm bis 500 µm, bevorzugt 10 µm bis 200 µm, aufweist.

## Claims

1. Method for producing a composite pane (1), which comprises the following steps:
a) providing a carrier film (5) having an infrared-reflecting coating (6),
b) placing a first laminating film (4.1) on the infrared-reflecting coating (6) of the carrier film (5),
c) joining the carrier film (5) and the first laminating film (4.1) to form a bilayer (7), wherein the carrier film (5) and the first laminating film (4.1) are unrolled from a roll in each case, are joined to form a bilayer (7), and the bilayer (7) is rolled onto a roll,
d) arranging the bilayer (7) on an outer pane (2) or an inner pane (3) such that the first laminating film (4.1) lies areally on the outer pane (2) or the inner pane (3) and arranging a second laminating film (4.2) on the bilayer (7) such that the second laminating film (4.2) lies areally on the carrier film (5),
e) placing an outer pane (2) or an inner pane (3) on the second laminating film (4.2),
f) autoclaving the layer stack, comprising
- outer pane (2),
- bilayer (7) made of the first laminating film (4.1) and the carrier film (5) having an infrared-reflecting coating (6),
- second laminating film (4.2), and
- inner pane (3)
to form a composite pane (1),
wherein the carrier film (5) and the first laminating film (4.1) are joined in step c) under pressure at a temperature of 45°C to 65°C to form a bilayer (7), and wherein in step d), before the placement of the second laminating film (4.2), the carrier film (5) having an infrared-reflecting coating (6) is removed at least in one edge region (A) of the composite pane (1).

2. Method according to claim 1, wherein in step d), before the placement of the second laminating film, the carrier film (5) having an infrared-reflecting coating (6) is removed in the region (B) of at least one sensor window of the composite pane (1).

3. Method according to one of claims 1 through 2, wherein between step c) and step d), at least two busbars (9) are inserted into the bilayer (7), the busbars (9) electrically conductingly contact the infrared-reflecting coating (6), and an electrically conducting coating is used as an infrared-reflecting coating (6).

4. Method according to one of claims 1 through 3, wherein the infrared-reflecting coating (6) is applied on the carrier film (5) before step a) by physical vapor deposition.

5. Method according to one of claims 1 through 4, wherein the infrared-reflecting coating (6) contains at least silver and/or an electrically conductive oxide.

6. Method according to one of claims 1 through 5, wherein the first laminating film (4.1) and the second laminating film (4.2) contain polyvinyl butyral (PVB), ethylene vinyl acetate (EVA), polyurethane (PU), and/or mixtures and/or copolymers thereof.

7. Method according to one of claims 1 through 6, wherein the first laminating film (2.1) and the second laminating film (3) have a thickness of 0.2 mm to 2.0 mm, preferably of 0.3 mm to 1.0 mm.

8. Method according to one of claims 1 through 7, wherein the carrier film (5) contains polyethylene terephthalate (PET), polyethylene (PE), and/or mixtures and/or copolymers thereof.

9. Method according to one of claims 1 through 8, wherein the carrier film (5) has a thickness of 5 µm to 500 µm, preferably 10 µm to 200 µm.

## Revendications

1. Procédé de fabrication d'une vitrage composite (1), qui comprend les étapes suivantes:
a) fournir un film support (5) ayant un revêtement réfléchissant les infrarouges (6),
b) placer un premier film de stratification (4.1) sur le revêtement réfléchissant les infrarouges (6) du film support (5),
c) joindre le film support (5) et le premier film de stratification (4.1) pour former une bicouche (7), le film support (5) et le premier film de stratification (4.1) étant déroulés d'un rouleau dans chaque cas, joints pour former une bicouche (7), et la bicouche (7) étant enroulée sur un rouleau,
d) disposer le bicouche (7) sur une vitre extérieure (2) ou intérieure (3) de telle sorte que le premier film de stratification (4.1) repose latéralement sur la vitre extérieure (2) ou intérieure (3) et disposer un deuxième film de stratification (4.2) sur le bicouche (7) de telle sorte que le deuxième film de stratification (4.2) repose latéralement sur le film support (5),
e) placer une feuille extérieure (2) ou une feuille intérieure (3) sur le deuxième film de stratification (4.2),
f) autoclavage de la pile de couches, comprenant
- vitre extérieure (2),
- bicouche (7) constituée du premier film de stratification (4.1) et du film support (5) ayant un revêtement réfléchissant les infrarouges (6),
- deuxième film de stratification (4.2), et
- vitre intérieure (3)
pour former un vitrage composite (1),
dans lequel le film support (5) et le premier film de stratification (4.1) sont assemblés à l'étape c) sous pression à une température de 45°C à 65°C pour former une bicouche (7), et dans lequel à l'étape d), avant la mise en place du second film de stratification (4.2), le film support (5) ayant un revêtement réfléchissant les infrarouges (6) est enlevé au moins dans une zone de bord (A) de la vitrage composite (1).

2. Procédé selon la revendication 1, dans lequel à l'étape d), avant la mise en place du second film de stratification, le film support (5) ayant un revêtement réfléchissant les infrarouges (6) est retiré dans la zone (B) d'au moins une fenêtre de capteur de la vitre composite (1).

3. Procédé selon l'une des revendications 1 à 2, dans lequel, entre l'étape c) et l'étape d), au moins deux barres omnibus (9) sont insérées dans le bicouche (7), les barres omnibus (9) sont en contact électrique avec le revêtement réfléchissant les infrarouges (6), et un revêtement électriquement conducteur est utilisé comme revêtement réfléchissant les infrarouges (6).

4. Procédé selon l'une des revendications 1 à 3, dans lequel le revêtement réfléchissant les infrarouges (6) est appliqué sur le film support (5) avant l'étape a) par dépôt physique en phase vapeur.

5. Procédé selon l'une des revendications 1 à 4, dans lequel le revêtement réfléchissant les infrarouges (6) contient au moins de l'argent et/ou un oxyde électriquement conducteur.

6. Procédé selon l'une des revendications 1 à 5, dans lequel le premier film de stratification (4.1) et le second film de stratification (4.2) contiennent du butyral de polyvinyle (PVB), de l'éthylène-acétate de vinyle (EVA), du polyuréthane (PU), et/ou des mélanges et/ou des copolymères de ceux-ci.

7. Procédé selon l'une des revendications 1 à 6, dans lequel le premier film de stratification (2.1) et le second film de stratification (3) ont une épaisseur comprise entre 0,2 mm et 2,0 mm, de préférence entre 0,3 mm et 1,0 mm.

8. Procédé selon l'une des revendications 1 à 7, dans lequel le film support (5) contient du polyéthylène téréphtalate (PET), du polyéthylène (PE), et/ou des mélanges et/ou des copolymères de ceux-ci.

9. Procédé selon l'une des revendications 1 à 8, dans lequel le film support (5) a une épaisseur de 5 µm à 500 µm, de préférence de 10 µm à 200 µm.
